# EUROPÄISCHE PATENTANMELDUNG

(11) **EP 0 947 275 A2**
(43) Veröffentlichungstag der Anmeldung: **06.10.1999**
(21) Anmeldenummer: 99105245.7
(22) Anmeldetag: 13.03.1999
(51) Int. Cl.: B23K 9/04

(54) **Verfahren und Zweikomponentenauftragssschweisswerkstoff zur Herstellung von hochverschleissfesten Oberflächen durch Lichtbogenauftragsschweissung**

(30) Priorität: 01.04.1998 DE 19814519
(71) Anmelder: Castolin GmbH, 65830 Kriftel (DE)
(72) Erfinder: Seifahrt, Horst, Dr.-Ing., 1092 Belmont (CH)
(74) Vertreter: Wolf, Günter, Dipl.-Ing.

(57) **Zusammenfassung**

Die Erfindung betrifft ein Verfahren zur Herstellung von hochverschleißfesten Oberflächen durch Auftragsschweißen. Dabei wird die verschleißfeste Oberflächenschicht auf ein metallisches Substrat mittels einer stromführenden, mit Vorschub relativ zur Substratfläche bewegten, die Elektrode bildenden Schweißdrahtes als erste Auftragskomponente aufgebracht, wobei kontinuierlich und proportional zum Drahtvorschub ein pulverförmiger Schweißwerkstoff in den Wirkbereich eines Lichtbogens eingeführt und dort zusammen mit dem Drahtende niedergeschmolzen wird.
Nach der Erfindung wird die Auftragsschweißung mittels eines eine Legierungspulverfüllung enthaltenden Röhrchendrahtes als erster Auftragskomponente durchgeführt und dabei die zweite Auftragskomponente mit einer Zusammensetzung zugeführt, die der Gesamtzusammensetzung der ersten Auftragskomponente aus Pulverfüllung und Mantel des Röhrchendrahtes entspricht.

## Beschreibung

Die Erfindung betrifft ein Verfahren und einen Zweikomponentenauftragsschweißwerkstoff zur Herstellung von hochverschleißfesten Oberflächen durch Lichtbogenauftragsschweißung, bei dem die verschleißfeste Schicht auf ein metallisches Substrat mittels eines stromführenden, mit Vorschub relativ zur Substratfläche bewegten, die Elektrode bildenden Schweißdrahtes als erste Auftragskomponente aufgebracht und dabei kontinuierlich und proportional zum Drahtvorschub ein pulverförmiger Schweißwerkstoff als zweite Auftragskomponente in den Wirkbereich eines Lichtbogens eingeführt und dort zusammen mit dem Schweißdrahtende niedergeschmolzen wird.

Derartige Auftragsschweißverfahren, bei denen in der Regel der Vorschubbewegung des Schweißdrahtes eine Pendelbewegung überlagert ist, sind hinlänglich und seit langem bekannt und in Benutzung, so daß es diesbezüglich keines besonderen druckschriftlichen Nachweises bedarf. Solche hochverschleißfesten Oberflächen werden an Bauteilen aller Art benötigt, deren Flächen oder auch Teilbereiche permanent hohen Verschleißbeanspruchungen durch bspw. darüber gefördertes, insbesondere hartes Material oder sonstigen Dauerbeanspruchungen im Betrieb ausgesetzt sind.
Sofern, wie einleitend angeführt, als erste Auftragskomponente massiver Schweißdraht verwendet wird, werden die für die verschleißfeste Oberfläche gewünschten Legierungsbestandteile durch die zweite pulverförmige Auftragskomponente eingebracht, die in der Regel auch schon relativ grobkörnige, harte (bspw. Karbide od.dgl.) Bestandteile enthält. Der massive Schweißdraht und die harten Bestandteile der zweiten Komponente verlangen dabei einen relativ hohen Energieeintrag, der sich natürlich beim Auftragsvorgang via Lichtbogen auch auf das zu beschichtende Substrat auswirkt, d.h., es entsteht eine Auftragsschicht, die im Übergang zum unbeeinträchtigt gebliebenen Substrat eine mit dem Substratmaterial stark vermischte und demgemäß weniger verschleißfeste Zwischenlage aufweist, weshalb, was in der Regel erforderlich ist, der gesamte Auftrag relativ dick angelegt werden muß mit entsprechend hohem Aufwand an Zeit, Material und auch Energie.

Soweit bekannt und unter Verweis auf die DD-A-259 587 wird in gleicher Weise für derartige Auftragsschweißungen statt massiver Schweißdrähte auch schon mit Pulver gefüllter Röhrchendraht verwendet, wobei ebenfalls via extern zugeführter, pulverförmiger zweiter Auftragskomponente Einfluß auf die Legierungszusammensetzung der aufgelegten Oberflächenschicht genommen wird, d.h., die bisher in Verbindung mit Röhrchendraht zugeführte, pulverförmige zweite Auftragskomponente weicht zumindest insofern von der ersten Komponente (Röhrchendraht) ab, als diese nicht oder nicht in entsprechendem Umfange der Zusammensetzung der ersten Auftragskomponente entspricht, wie dies auch das Ausführungsbeispiel gemäß vorgenannter DD-A-259 587 belegt.

An dieser Stelle sei darauf hingewiesen, daß der Verwendung von Massivdraht oder Röhrchendraht jeweils plus externer Pulverzufuhr der Gedanke zugrunde liegt, die relativ teure Herstellung von mit Pulver gefülltem Röhrchendraht zu umgehen, die notwendig wäre, wollte man die zusätzlich aus Gründen eines entsprechenden Mengenauftrages zuzuführenden Legierungsbestandteile in Form eines entsprechend stark dimensionierten Röhrchendrahtes oder in Form eines zusätzlichen Röhrchendrahtes zuführen.

Mit der externen Zufuhr einer pulverförmigen zweiten Auftragskomponente muß man jedoch, abgesehen vom vorerwähnten hohen, sich negativ, wie vorerläutert, auf das Substrat und die Auftragsschicht auswirkenden Energieeintrag, alle Imponderabilien einer Pulverzufuhr in Kauf nehmen, d.h., bei gestörter oder nicht mehr gleichmäßiger Pulverzufuhr ändert sich zwangsläufig die Zusammensetzung der aufgetragenen bzw. aufzutragenden Beschichtung, weil bei bspw. unterbrochener, externer Pulverzufuhr und nur noch mit dem Draht weiterlaufender Auftragsschweißung die betreffenden Bestandteile der Pulverzufuhr fehlen.

Der Erfindung liegt die Aufgabe zugrunde, das Auftragsschweißverfahren der eingangs genannten Art dahingehend zu verbessern, daß der erforderliche Energieeintrag nicht wesentlich größer ist als bei alleiniger Abschmelzung eines Röhrchendrahtes, daß die Aufmischung und somit der Zwischenbereich zwischen Substrat und verschleißfester Auftragsschicht minimiert ist, sich bei Störungen der Pulverzufuhr oder des Röhrchendrahtvorschubes keine Veränderungen in der Legierungszusammensetzung der Auftragsschicht ergeben und daß schließlich in der Auftragsschicht eine weitestgehend homogene Verteilung aller Legierungsbestandteile vorliegt.

Diese Aufgabe ist mit einem Verfahren der eingangs genannten Art nach der Erfindung dadurch gelöst, daß die Auftragsschweißung mittels eines eine Legierungspulverfüllung enthaltenden Röhrchendrahtes als erster Auftragskomponente durchgeführt und dabei die zweite Auftragskomponente mit einer Zusammensetzung zugeführt wird, die der Gesamtzusammensetzung der ersten Auftragskomponente aus Pulverfüllung und Mantel des Röhrchendrahtes entspricht.

Im Auftragsschweißmaterial als hier sogenanntem Zweikomponentenauftragsschweißwerkstoff zur Durchführung des erfindungsgemäßen Verfahrens schlägt sich dies entsprechend nieder, d.h., die zweite pulverförmige Auftragskomponente entspricht, und das ist entscheidend, in ihrer Zusammensetzung der ersten Auftragskomponente. Mit anderen Worten heißt dies, daß die zweite, extern als Pulver zuzuführende Auftragskomponente zum einen der Pulverfüllung der ersten Auftragskomponente entspricht, die aber zum anderen prozentual entsprechend zusätzlich in Pulverform noch einen Anteil enthält, der dem Mantelmaterial des verwendeten Röhrchendrahtes entspricht.

Im Interesse gleichmäßiger Abschmelz - bzw. Einschmelzbarkeit und damit zur Förderung der per se erreichbaren Homogenität der Auftragsschicht sind vorteilhaft die Pulverfüllung der ersten Auftragskomponente und das die zweite Auftragskomponente bildende Auftragspulver mit einer im wesentlich identischen Korngröße bemessen, die 400 µm nicht überschreitet.

Hinsichtlich der Verfahrensführung selbst besteht eine vorteilhafte Weiterbildung darin, daß die zweite Auftragskomponente, in Auftrags- bzw. Vorschubrichtung gesehen, vor der ersten Auftragskomponente auf das Substrat aufgebracht wird. Dieser Vorauftrag der zweiten Auftragskomponente auf das zu beschichtende Substrat wirkt gewissermaßen aufgrund seines durch die Aufschmelzung benötigten Energieverbrauches als Dämmung gegen den vollen Energieeintrag in das Substrat, das also dadurch weniger aufgeschmolzen und somit weniger Substratmaterial mit dem abgeschmolzenen Komponentenmaterial aufgemischt wird. Dadurch kann sogar in Betracht gezogen werden, die für die Verschleißfestigkeit der Auftragsschicht wesentlichen Legierungsbestandteile in der Pulverfüllung des Röhrchendrahtes und im extern zugeführten Pulver zu reduzieren.

Bezüglich des erforderlichen Energieeintrages, der bei der Verarbeitung von Röhrchendraht mit Pulverfüllung per se geringer ist als bei Massivdraht mit extern zugeführten Pulver, das, wie gesagt, in der Regel zudem relativ grobkörnige Hartbestandteile enthält, ergibt sich vergleichsweise und für das erfindungsgemäße Verfahren überraschend, daß bspw. ausgehend von einem Energieeintrag bei einer Stromstärke von 320 A und einer Spannung von 31 V, für den Röhrchendraht allein bei einer externen, zur ersten Auftragskomponente zusätzlichen und bevorzugten Pulverzufuhr mit einer Größenordnung von 50% lediglich eine Spannungserhöhung von 5 bis 6 V erforderlich ist.

Zusammenfassend ergibt sich beim erfindungsgemäßen Verfahren durch den energieverbrauchenden Effekt bei der Aufschmelzung der zweiten Auftragskomponente eine vergleichsweise geringe Aufmischung mit dem Substratmaterial, somit weniger Legierungsänderung bzw. Legierungsbeeinflussung, eine verbesserte, homogenere Gesamtstruktur der Auftragsschicht und letztendlich eine höhere Verschleißfestigkeit im Vergleich zu den Auftragsergebnissen bisheriger Verfahren, d.h., solchen, die nur mit Fülldraht oder mit Massivdraht plus externer Pulverzugabe arbeiten.

Einer näheren Erläuterung der für die Durchführung des erfindungsgemäßen Verfahrens erforderlichen Einrichtungen, nämlich Werkstücksauflage, Röhrchendraht- und Pulverzuführung einschließlich Pulverdosierung, Förderelemente für den Draht und den Relativvorschub zwischen Werkstück und gesamter Auftragseinrichtung und der ganzen elektrischen Installation einschließlich entsprechender Steuer- und Überwachungseinrichtungen, bedarf es nicht, da sich daran grundsätzlich nichts ändert.

Ebenfalls bedarf es keiner ins Detail gehenden Erläuterung bezüglich der zu verarbeitenden Materialien bzw. der Bestandteile von erster und zweiter Auftragskomponente, da sich auch hierbei an den herkömmlichen Materialien zur Herstellung hochverschleißfester Oberflächen nichts ändert, d.h., wesentlich und entscheidend ist immer nur, daß die extern zugeführte zweite, pulverförmige Auftragskomponente in ihrer Gesamtzusammensetzung der der ersten Auftragskomponente (also einschließlich des Mantelmaterials des Röhrchendrahtes) entspricht.

## Patentansprüche

1. Verfahren zur Herstellung von hochverschleißfesten Oberflächen durch Lichtbogenauftragsschweißung, bei dem die verschleißfeste Schicht auf ein metallisches Substrat mittels eines stromführenden, mit Vorschub relativ zur Substratfläche bewegten, die Elektrode bildenden Schweißdrahtes als erste Auftragskomponente aufgebracht und dabei kontinuierlich und proportional zum Drahtvorschub ein pulverförmiger Schweißwerkstoff als zweite Auftragskomponente in den Wirkbereich eines Lichtbogens eingeführt und dort zusammen mit dem Schweißdrahtende niedergeschmolzen wird,
**dadurch gekennzeichnet,**
daß die Auftragsschweißung mittels eines eine Legierungspulverfüllung enthaltenden Röhrchendrahtes als erster Auftragskomponente durchgeführt und dabei die zweite Auftragskomponente mit einer Zusammensetzung zugeführt wird, die der Gesamtzusammensetzung der ersten Komponente aus Pulverfüllung und Mantel des Röhrchendrathes entspricht.

2. Verfahren nach Anspruch 1,
**dadurch gekennzeichnet,**
daß die zweite Auftragskomponente, bezogen auf die erste Komponente mit einer reduzierten Menge in der Größenordnung von 50% zugeführt wird.

3. Verfahren nach Anspruch 1 oder 2,
**dadurch gekennzeichnet,**
daß die zweite Auftragskomponente, in Auftragsrichtung gesehen, vor der ersten Auftragskomponente auf das Substrat aufgebracht wird.

4. Zweikomponentenauftragsschweißwerkstoff, bestehend aus einem Röhrchendraht mit Pulverfüllung als erster Auftragskomponente und aus einem Auftragsschweißpulver als zweiter Komponente zur Durchführung des Verfahrens nach einem der Ansprüche 1 bis 3,
dadurch gekennzeichnet,
daß die zweite pulverförmige Auftragskomponente in ihrer Zusammensetzung der Gesamtzusammensetzung der ersten Auftragskomponente entspricht.

5. Zweikomponentenauftragsschweißwerkstoff nach Anspruch 4,
dadurch gekennzeichnet,
daß die Pulverfüllung der ersten Auftragskomponente und das die zweite Auftragskomponente bildende Auftragspulver mit einer im wesentlichen identischen Korngröße bemessen sind, die 400 µm nicht überschreitet.
